# EUROPÄISCHE PATENTSCHRIFT

(11) **EP 0 943 229 B1**
(45) Veröffentlichungstag und Bekanntmachung des Hinweises auf die Patenterteilung: **27.08.2003**
(21) Anmeldenummer: 99104805.9
(22) Anmeldetag: 11.03.1999
(51) Int. Cl.: A01D 45/02

(54) **Vorrichtung zum Ernten von stengeligem Erntegut**
Device for harvesting stalk crops
Dispositif à moissonner des récoltes à tige

(30) Priorität: 14.03.1998 DE 19811155
(43) Veröffentlichungstag der Anmeldung: 22.09.1999
(73) Patentinhaber: CLAAS Saulgau GmbH, 88340 Bad Saulgau (DE)
(72) Erfinder: Wiegert, Ludger, 48346 Ostbevern (DE)

(56) Entgegenhaltungen:
- EP-A- 0 852 109
- DE-U- 9 105 932
- FR-A- 2 453 595
- US-A- 1 641 436
- US-A- 2 678 526
- US-A- 2 905 181
- US-A- 2 947 133
- US-A- 3 633 348
- US-A- 5 040 361

## Beschreibung

Die Erfindung betrifft eine Vorrichtung zum Ernten von stengeligem Erntegut nach dem Oberbegriff der Anspruchs 1.

In der Druckschrift US-A-1 641 436 ist eine Vorrichtung mit einer aus zwei sich verjüngenden Teilabschnitten bestehenden Pflückwalze beschrieben, wobei die Verjüngung entgegen der Fahrtrichtung angeordnet ist.

Bekannte Vorrichtungen zum Ernten von Mais (wie beispielsweise in den Druckschriften DE 40 41 530, DE 197 57 213 bzw. EP 0 716 803 beschrieben) umfassen in der Regel eine Fördervorrichtung, die die Maisstengel parallel zur Fahrtrichtung der Erntevorrichtung entlang einer Pflückwalze fördert. Häufig sind jeweils zwei solcher Pflückwalzen parallel zueinander angeordnet und gegenläufig angetrieben.

Derartige Pflügwalzen dienen dazu, das Erntegut am unteren Stengelbereich zu erfassen und nach unten zu ziehen. Hierbei wird der Stengel durch ein Pflückelement, beispielsweise einen durch zwei Bleche gebildeten Schlitz gezogen, wobei an einer entsprechenden Pflückkante, die dem Rand eines solchen Schlitzes entspricht, die Fruchtstände, d. h. die Maiskolben oder dergleichen, abgepflückt werden.

Dadurch, daß die Pflanzenstengel in der Regel am unteren Ende dicker sind und zum oberen Ende hin verjüngend zulaufen, ist beim Durchzug des Stengels im vorderen Pflückwalzenbereich aufgrund der starken Quetschung des Stengels eine vergleichsweise hohe Antriebskraft für die Pflückwalzen erforderlich. Zudem ist der Verschleiß in diesem Bereich verstärkt. Daher ist man bereits teilweise dazu übergegangen, die Pflückwalzen konisch auszubilden. Hierdurch können die Pflanzen mit geringeren Kräften eingezogen werden.

Mit der bezüglich der vorliegenden Anmeldung nicht vorveröffentlichten DE 197 30 912 wird eine Vorrichtung zum Ernten von Mais und anderen Körnerfrüchten vorgeschlagen, bei der die Achse konisch ausgebildeter Pflückwalzen nicht parallel zur Fahrtrichtung der Erntevorrichtung angeordnet wird. Hierdurch wird erreicht, daß die Durchzugsgeschwindigkeit der Pflanzenstengel im vorderen Bereich der Pflückwalze geringer ist als im hinteren Bereich und kontinuierlich über die Länge der Pflückwalze zunimmt. Die geringere Geschwindigkeit im Eingangsbereich der Pflückwalze verursacht weniger Schlupf und somit weniger Verschleiß.

Hierdurch wird der Verschleiß zwar reduziert, nach wie vor müssen jedoch die Pflückwalzen ebenso wie bei den sonstigen Ausführungen gemäß dem Stand der Technik in regelmäßigen Intervallen getauscht werden, was einen entsprechenden Kostenaufwand verursacht.

Aufgabe der Erfindung ist es demgegenüber, eine Vorrichtung zum Ernten vorzuschlagen, bei der der Kostenaufwand für Wartungsarbeiten infolge von Verschleißerscheinungen reduziert wird.

Diese Aufgabe wird ausgehend von einer Erntevorrichtung der einleitend genannten Art durch die gekennzeichneten Merkmale des Anspruchs 1 gelöst.

Durch die in den Unteransprüchen aufgeführten Maßnahmen sind vorteilhafte Ausführungen und Weiterbildungen der Erfindung möglich.

Dementsprechend wird eine erfindungsgemäße Vorrichtung zum Ernten von stengeligem Erntegut, wie Mais oder dergleichen, mit wenigstens einer Pflückwalze und einer Fördervorrichtung zur Förderung des Ernteguts entlang der Pflückwalze gemäß dem Oberbegriff des Anspruchs 1 dadurch gekennzeichnet, daß beide Teilstücke der Pflückwalze eine sich in Fahrtrichtung verjüngende konische Form aufweisen.

Hierdurch kann beispielsweise, wie oben beim Stand der Technik ausgeführt, den unterschiedlichen Stengelstärken der Pflanzen, die sich von unten nach oben verjüngen, Rechnung getragen und somit die Antriebskraft der Pflückwalze verringert werden.

Die Erfindung nutzt darüber hinaus die Erkenntnis, daß der maßgebliche Verschleiß an der Pflückwalze im vorderen Bereich entsteht. Sofern also die Pflückwalze gemäß der Erfindung in diesem Bereich soweit verschlissen ist, daß ein Austausch erforderlich ist, so muß nunmehr nur noch das Teilstück ausgetauscht werden, das sich in diesem vorderen Bereich befindet. Hierdurch werden die Kosten für die Wartung der Erntevorrichtung erheblich reduziert.

Vorteilhafterweise wird die Pflückwalze umfangsseitig mit Mitnahmeelementen zur Mitnahme der Pflanzenstengel versehen. Die Struktur derartiger Mitnahmeelemente kann hierbei an das jeweilige Erntegut angepaßt werden.

In einer vorteilhaften Weiterbildung dieser Erfindung werden wenigstens zwei in axialer Richtung hintereinander liegende Strukturbereiche der Pflückwalze mit unterschiedlicher Struktur der Mitnahmeelemente versehen. Hierdurch wird den unterschiedlichen Pflanzenteilen, die im jeweiligen Bereich der Pflückwalze zur Verarbeitung kommen, Rechnung getragen. Durch eine derartige unterschiedliche Strukturgebung kann die Antriebskraft sowie der Verschleiß im Betrieb der Pflückwalze weiter verringert werden.

In einer besonders vorteilhaften Weiterbildung der Erfindung werden die separaten Teilstücke mit jeweils unterschiedlicher Struktur der Mitnahmeelemente versehen. Hierbei ist insbesondere im vorderen Teilstück eine Optimierung der Mitnahmeelemente im Hinblick auf den beim Einzug der Stengel in diesem Bereich erforderlichen Pflückprozeß sowie die Verarbeitung der unteren Stengelbereiche möglich.

Je nach Anwendungsfall können hierbei auch unterschiedliche Konuswinkel in axialer Richtung angebracht werden. In einer vorteilhaften Weiterbildung der Erfindung können die separaten Teilstücke mit unterschiedlichen Konuswinkeln versehen werden. Dies bietet insbesondere fertigungstechnische Vorteile. Denkbar wäre beispielsweise auch ein kürzerer Konus mit größerem Konuswinkel an der Spitze der Erntevorrichtung, der mit einer außenliegenden Schnecke versehen ist, um die Stengel zusätzlich zu der oben aufgeführten Fördervorrichtung zu erfassen und in axialer Richtung der Pflückwalze zu transportieren.

In einer besonderen Weiterbildung der Erfindung wird zudem eine gewinkelte Achsanordnung zweier benachbarter Pflückwalzen zueinander vorgesehen. Insbesondere in Verbindung mit der oben angeführten Konusform ist es hierdurch möglich, die Pflanzenstengel in unterschiedlichen Bereichen in axialer Richtung der Pflückwalzen mit unterschiedlicher Durchzugsgeschwindigkeit einzuziehen. Die Durchzugsgeschwindigkeit wird dort am größten sein, wo der Umfang der Pflückwalze seinen größten Wert einnimmt. Bei kleineren Außenumfängen ist bei gleicher Drehzahl naturgemäß die Durchzugsgeschwindigkeit geringer. Durch die gewinkelte Anordnung der Pflückwalzen ist es dabei möglich, unabhängig von der Durchzugsgeschwindigkeit den Abstand der Pflückwalzen gleich zu halten oder an die Stengelstärke der im jeweiligen Pflückwalzenbereich zur Verarbeitung kommenden Pflanzenstengel anzupassen.

In einer vorteilhaften Weiterbildung der Erfindung wird eine in axialer Richtung im Verhältnis zur Länge der Pflückwalze sehr kurze Kupplung zwischen zwei separaten Teilstücken vorgesehen. Eine kurze Steckkupplung ermöglicht das Abziehen des vorderen Teilstücks auf engstem Raum. Insbesondere bei einer gewinkelten Achsanordnung ermöglicht eine solche Steckkupplung auch vergleichsweise kleine Abstände zwischen den Pflückwalzen.

Bevorzugt wird wenigstens eine Pflückwalze mit einer Walzenstruktur versehen, die eine Verbesserung der Gutzerkleinerung bzw. Gutquetschung ermöglicht. Eine solche Walzenstruktur ermöglicht weiterhin wie oben angeführt eine Anpassung der Pflückwalzenbereiche an die während des Erntevorgangs bereichsspezifisch auftretenden Kräfte.

In einer vorteilhaften Weiterbildung der Erfindung wird die Pflückwalze wenigstens teilweise mit schneidenden Mitnahmeelementen versehen. Schneidende Mitnahmeelemente zerhäckseln während des Durchzugs der Stengel des Ernteguts diese Stengel, so daß eine schnellere Verrottung der auf dem Feld verbleibenden Pflanzenreste erfolgt.

In einer anderen Ausführungsform der erfindungsgemäßen Pflückwalze wird diese mit stumpfen Mitnahmeelementen versehen. Ein solches stumpfes Mitnahmeelement wird in Bezug zu einem Gegenelement, beispielsweise einem entsprechendem Element einer benachbarten Pflückwalze, so angeordnet, daß zwischen dem stumpfen Mitnahmeelement und dem Gegenelement während des Einzugsvorgangs ein minimaler Abstand verbleibt, so daß der dazwischen befindliche Stengel nicht geschnitten, sondern nur gequetscht wird. Eine solche Anordnung von Mitnahmeelementen reduziert den Energiebedarf, da hierbei weniger Schnitte durchgeführt werden. Durch die Quetschung der Stengel wird die Verrottung ebenfalls begünstigt, da das Eindringen zersetzender Organismen in die gequetschten Stengel erleichtert wird.

Eine Kombination von über den Umfang der Pflückwalze verteilten, schneidenden und stumpfenden Mitnahmeelementen ist ebenfalls denkbar. Je nach Verteilung von stumpfen bzw. schneidenden Mitnahmeelementen über den Umfang der Pflückwalze kann die Länge des Häckselguts eingestellt werden.

Vorteilhafter Weise werden jeweils zwei Pflückwalzen mit gegenläufigem Drehsinn und phasengleich angeordneten Mitnahmeelementen versehen. Somit treffen beim Drehen dieser Pflückwalzen korrespondierende Mitnahmeelemente, beispielsweise schneidende oder stumpfe Mitnahmeelemente wie oben angeführt, aufeinander, so daß zwischen diesen Mitnahmeelementen die einzuziehenden Stengel eingeklemmt und ggf. geschnitten werden.

Insbesondere können hierbei schneidende Mitnahmeelemente nicht nur auf ebenfalls schneidende, sondern auch auf stumpfe Mitnahmeelemente treffen.

In einer Weiterbildung der Erfindung werden die Pflückwalzen hierbei so ausgebildet, daß zwischen den einzelnen Mitnahmeelementen gutaufnehmende Freiräume gegeben sind. In diesen Freiräumen können Pflanzenteile, die sich an dem einzuziehendem Stengel befinden, z. B. Blätter oder dergleichen, aufgenommen werden, wobei eine Pressung vermieden und somit der Energiebedarf hierdurch weiter herabgesetzt wird.

In einer anderen vorteilhaften Ausführungsform werden die Mitnahmeelemente zweier benachbarter Pflückwalzen so ausgebildet, daß die Pflückwalzen verzahnend ineinander greifen. Dies kann beispielsweise durch einheitlich ausgebildete Mitnahmeelemente an beiden Pflückwalzen bewerkstelligt werden, wobei die Pflückwalzen zwar nach wie vor gegenläufig drehen, jedoch nunmehr einen gewissen Phasenversatz aufweisen, so daß sie alternierend von jeweils einer der beiden Pflückwalzen die Verbindungsgerade zwischen den Pflückwalzenachsen passieren. Der Abstand der Achsen der Pflückwalze ist hierbei kleiner als die Summe der beiden äußeren Hüllkurven der drehenden Pflückwalzen.

Bei unterschiedlich ausgebildeten Mitnahmeelementen ist die Phase so einzustellen, daß die jeweils korrespondierenden unterschiedlichen Mitnahmeelemente in der gegenläufigen Drehbewegung der beiden benachbarten Pflückwalzen entsprechend in Eingriff kommen können. Auch hier ist der Abstand der Achsen der beiden Pflückwalzen kleiner als die Summe der beiden Hüllkurven.

Verschiedene Ausführungsbeispiele der Erfindung sind in der Zeichnung dargestellt und werden nachfolgend anhand der Figuren näher erläutert.

Im einzelnen zeigen
- Fig. 1: eine Draufsicht einer Erntevorrichtung mit zwei Pflückwalzen,
- Fig.2: eine Frontansicht einer Vorrichtung gemäß Fig. 1,
- Fig. 3: ein Längsschnitt durch eine Vorrichtung gemäß den Fig. 1 und 2,
- Fig. 4: einen Längsschnitt durch eine erfindungsgemäße Pflückwalze,
- Fig. 5: eine schematische Darstellung eines Ausführungsbeispiels für die Struktur eines Pflückwalzenbereichs,
- Fig. 6: ein weiteres Ausführungsbeispiel für die Struktur eines Pflückwalzenbereichs,
- Fig. 7: ein weiteres Ausführungsbeispiel für die Struktur eines Pflückwalzenbereichs,
- Fig. 8: ein Ausführungsbeispiel für die Struktur eines Pflückwalzenbereichs mit ineinander greifenden Strukturelementen und
- Fig. 9: eine weitere Ausführungsform eines Pflückwalzenbereichs mit ineinander greifenden Strukturelementen.

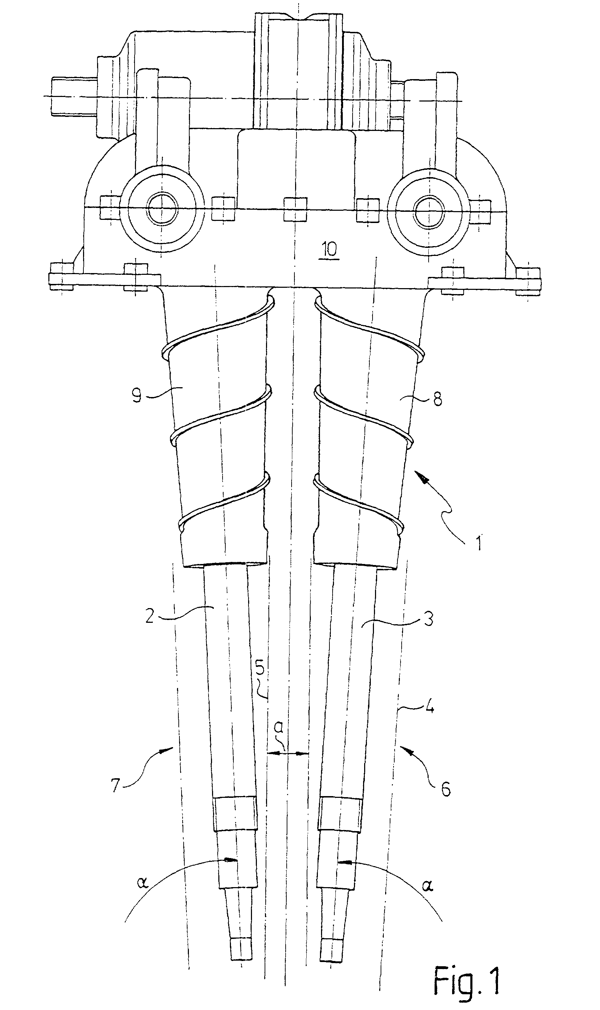

Die Vorrichtung 1 gemäß Fig. 1 zeigt zwei Wellenstümpfe 2, 3, die mit einer in Fig. 1 durch gestrichelte Linien angedeuteten Pflückwalzenstruktur 4, 5 zwei Pflückwalzen 6, 7 ergeben. Die Wellenstümpfe 2, 3 sind in Lagerkästen 8, 9 gelagert und münden in ein Getriebegehäuse 10. Die Wellenstümpfe 2, 3 sind nicht parallel zu einander angeordnet, sondern laufen unter einem spitzen Winkel α aufeinander zu.

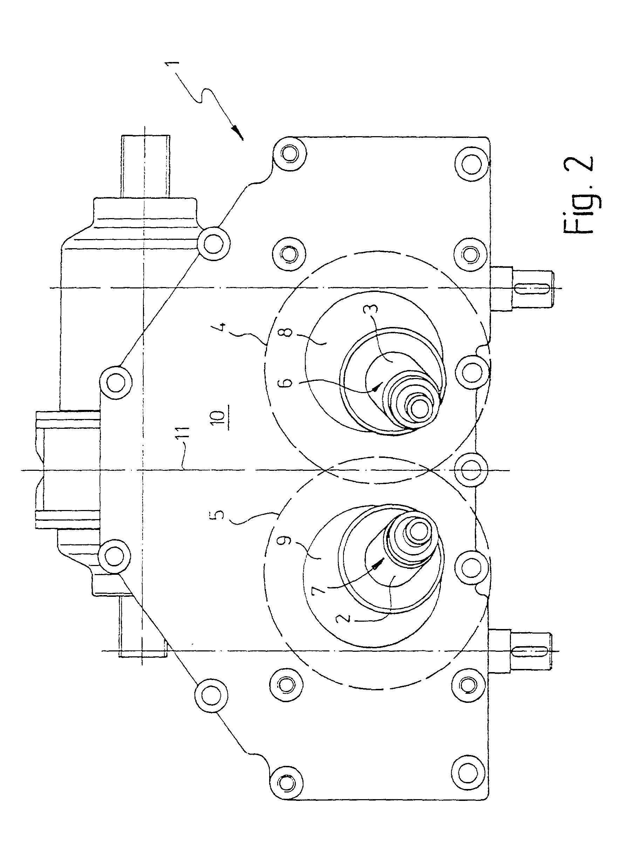

Diese gewinkelte Anordnung ist in der Frontansicht gemäß Fig. 2 deutlich zu erkennen. In dieser Darstellung sind die Pflückwalzenstrukturen 4, 5 nicht näher dargestellt, sondern wiederum durch gestrichelte Linien 4, 5 angedeutet. In diesem Fall greifen die Strukturen 4, 5 beim Passieren der Mittelachse 11 ineinander ein.

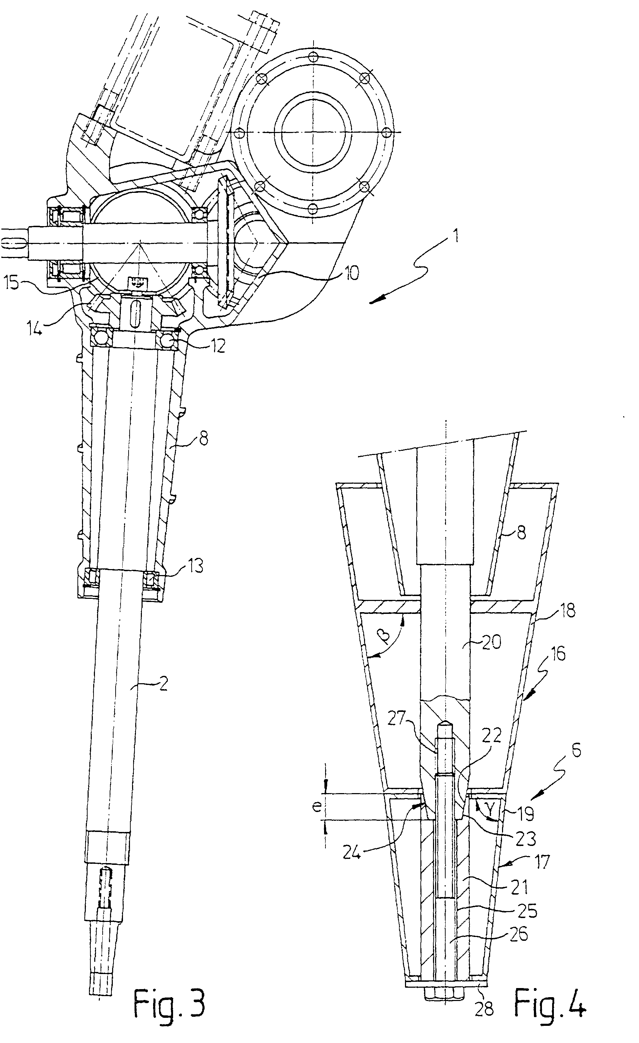

In der Schnittdarstellung gemäß Fig. 3 ist deutlich erkennbar, wie der Wellenstumpf 2 im Lagerkasten 8 über ein Kugellager 12 sowie ein Wälzlager 13 gelagert ist. Über ein Kegelrad 14 wird der Wellenstumpf 2 von einer rechtwinklig zum Wellenstumpf 2 angeordneten Antriebswelle 15 angetrieben.

Auch andere Lagerarten wären an dieser Stelle verwendbar, wobei es von Vorteil ist, die Walze mit möglichst im rückwärtigen Bereich dicht beieinander liegenden Lagerstellen an der Vorderseite freischwebend zu lagern.

Anhand von Fig. 3 wird die freischwebende, einseitige Halterung des Wellenstumpfes 2 veranschaulicht. Über die von einander beabstandeten Lager 12, 13 ist eine zuverlässige Lagerung möglich, wobei der Lagerkasten 8 hierbei die notwendige Stabilität aufweist.

In Fig. 4 ist erkennbar, wie die Pflückwalze 6 in zwei separate Teilstücke 16, 17 unterteilt ist. Jedes dieser Teilstücke 16, 17 weist eine konusförmige Walzenstruktur 18, 19 auf, die jeweils fest mit dem entsprechenden Wellenteil 20, 21 verbunden, beispielsweise verschweißt ist.

Die Wellenteile 20, 21 umfassen zwei miteinander korrespondierende Steckprofile 22, 23, die eine Wellenkupplung 24 bilden. Die Steckprofile 22, 23 können beispielsweise konusförmig ausgebildet werden. Es sind jedoch auch andere Profile, beispielsweise Polygonprofile oder dergleichen denkbar, die sowohl eine gute Passung als auch schlupflose Drehmomentübertragung gewährleisten.

Die Einstecktiefe e ist hierbei relativ kurz gehalten, so daß die Zerlegung der Pflückwalze 6 mit einem entsprechend kleinen Verschiebeweg des vorderen Teilstücks 17 beim Abziehen vom hinteren Teilstück 16 erfolgen kann.

Das vordere Wellenteil 21 wird mit einem Befestigungselement am hinteren Wellenteil 20 befestigt. In der vorliegenden besonderen Ausführungsform ist das vordere Wellenteil 21 mit einer Bohrung versehen, die von einer Schraube 26 durchsetzt wird, die in eine Gewindebohrung 27 des hinteren Wellenteils 20 eingeschraubt ist. Eine Abschlußplatte 28 sorgt für eine gleichmäßige Verteilung der durch die Schraube 26 aufgebrachten Spannkraft beim Befestigen der beiden Teilstücke 16, 17 aneinander.

In Fig. 4 ist weiterhin erkennbar, daß die beiden Teilstücke 16, 17 im vorliegenden Ausführungsbeispiel einen unterschiedlichen Konuswinkel β bzw. γ aufweisen.

Insbesondere bei gewinkelter Achsanordnung der Wellenstümpfe 2, 3 wird die Einstecktiefe der Wellenkupplung 24 so gewählt, daß beim Abziehen eines Teilstücks 17 dieses nicht an dem korrespondierenden vorderen Teilstücke der benachbarten Pflückwalze 7 anstößt. Dies ist vor allem bei gewinkelter Anordnung der Wellenstümpfe 2, 3 zu beachten.

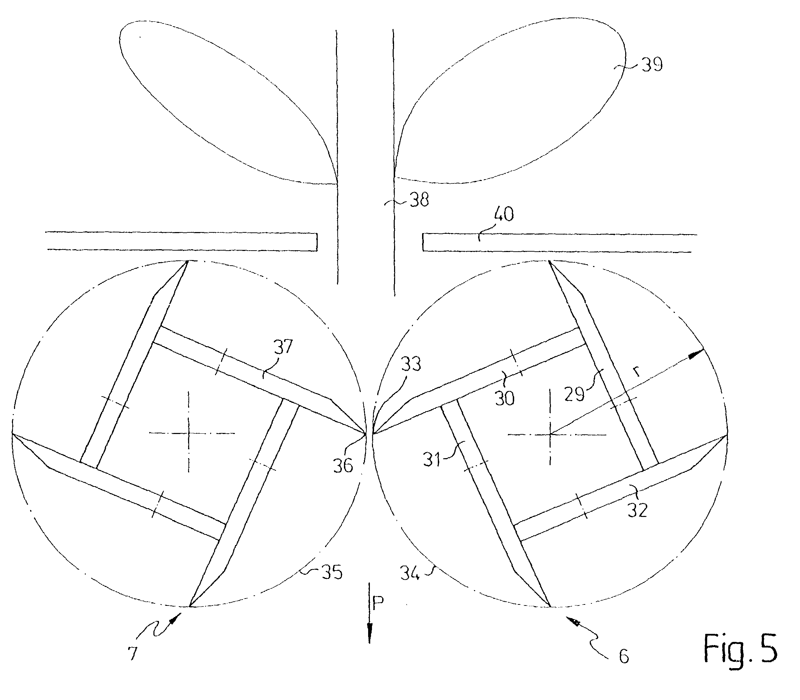

Die Darstellung gemäß Fig. 5 veranschaulicht die Funktion der Pflückwalzen 6, 7. Jeweils 4 Mitnahmeelemente 29, 30, 31, 32 bilden die Pflückwalzenstruktur 4 bzw. 5. Die Mitnahmeelemente 29 bis 32 sind jeweils mit einer spitzen Schneide 33 versehen. Die Hüllkurven 34, 35 sind so ausgebildet, daß sich zwei gegenüberliegende Schneiden 33, 36, die beim phasengleichen und gegenläufigen Drehen der Pflückwalzen 6, 7 aufeinander treffen, einen kleinen Abstand zwischen sich aufweisen.

Ein Pflanzenstengel 38 mit Fruchtständen 39, beispielsweise ein Maisstengel mit Maiskolben, wird von den beiden Schneiden 33, 36 der gegenläufig sich bewegenden Mitnahmeelementen 30, 37 der Pflückwalzen 6, 7 erfaßt und nach unten in Richtung des Pfeils P eingezogen. Die Schneiden 33, 36 zerschneiden dabei den Stengel 38. Während der Stengel 38 nach unten gezogen wird, werden die Furchtstände 39 an einem Abstreifer 40 gepflückt.

Mit einer Pflückwalzenstruktur gemäß diesem Ausführungsbeispiel nach Fig. 5 wird der Pflanzenstengel in regelmäßige kleine Stücke der Länge 2πr/n geschnitten, wobei r dem Radius der Hüllkurven 34, 35 und n der Anzahl der Mitnahmeelemente 29, 30 , 31, 32 entspricht.

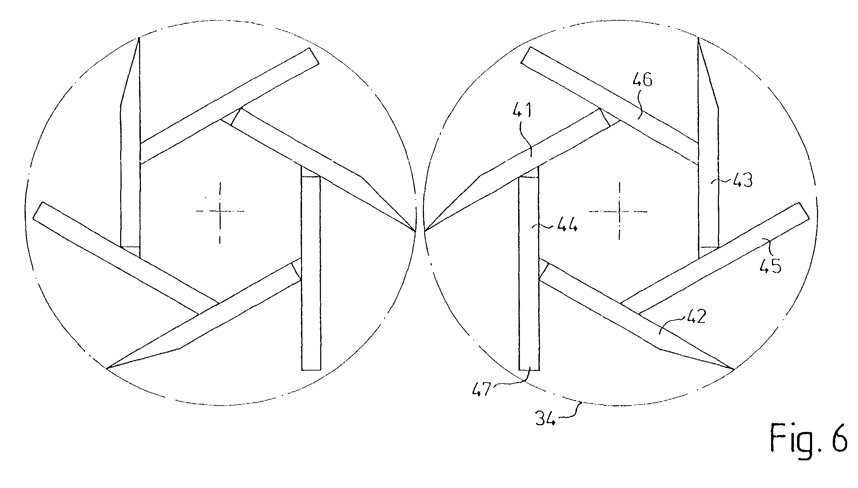

Die Ausführung gemäß Fig. 6 entspricht im wesentlichen der vorbeschriebenen Ausführung nach Fig. 5, wobei nunmehr jedoch alternierend zwischen schneidenden Mitnahmeelementen 41, 42, 43 stumpfe Mitnahmeelemente 44, 45, 46 angeordnet sind. Die Endbereiche 47 der stumpfen Mitnahmeelemente 44, 45, 46 sind so angeordnet, daß sie die Hüllkurve 34 nicht erreichen. Daher haben die stumpfen Mitnahmeelemente 44, 45, 46 lediglich quetschende Funktionen und zerkleinern den Pflanzenstengel 38 nicht. Andererseits wird aufgrund der geringeren Anzahl von Schnitten der Energiebedarf zum Antrieb der Pflückwalzen 6, 7 reduziert. Durch die quetschende Wirkung der stumpfen Mitnahmeelemente wird dennoch die Verrottung begünstigt, da der Eintritt zersetzender Organismen in das Häckselgut erleichtert wird. Auch in diesem Ausführungsbeispiel laufen die Pflückwalzen 6, 7 phasengleich gegenläufig, so daß immer entsprechend korrespondierende Mitnahmeelemente aufeinander treffen.

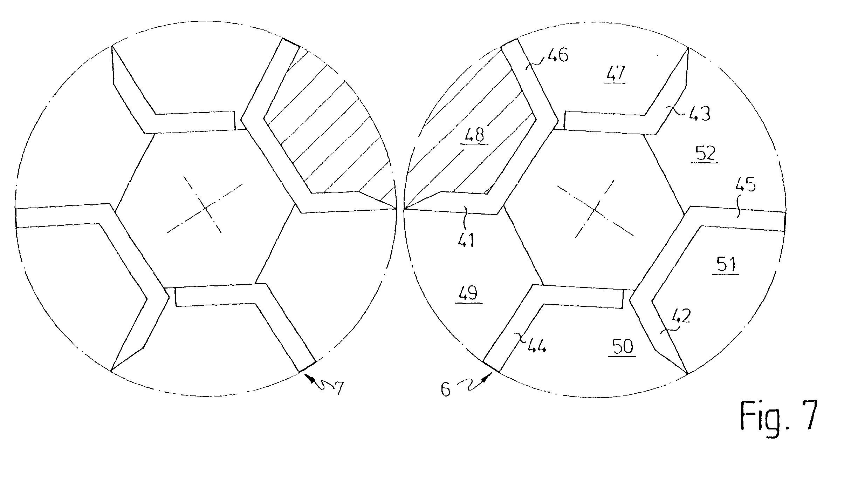

Die Ausführung gemäß Fig. 7 weist wiederum alternierend angeordnete schneidende bzw. stumpfe Mitnahmeelemente 41, 42, 43, 44, 45, 46 auf. Es sind nunmehr jedoch zwischen den Mitnahmeelementen bewußt größere Freiräume 47, 48, 49, 50, 51, 52 vorgesehen, die Erntegut in sich aufnehmen können. Die Wirkung dieser Pflückwalzenstruktur entspricht dem vorbeschriebenen Ausführungsbeispiel, wobei nunmehr eine größere Menge sonstiger am Pflanzstengel 38 befindlicher Pflanzenteilen, beispielsweise Blätter oder dergleichen in die Freiräume aufgenommen werden können. Dies vermeidet eine etwaige Verpressung beim Durchzug zwischen den Pflückwalzen 6, 7 wodurch wiederum der Energiebedarf verringert wird.

Die Ausführungsbeispiele gemäß den Fig. 5 bis 7 sind vor allem für die vorderen Pflückwalzenbereiche geeignet, wo große Durchzugskräfte erwünscht sind, da die Fruchtstände während des Durchzugs in diesem Pflückwalzenbereich gepflückt werden.

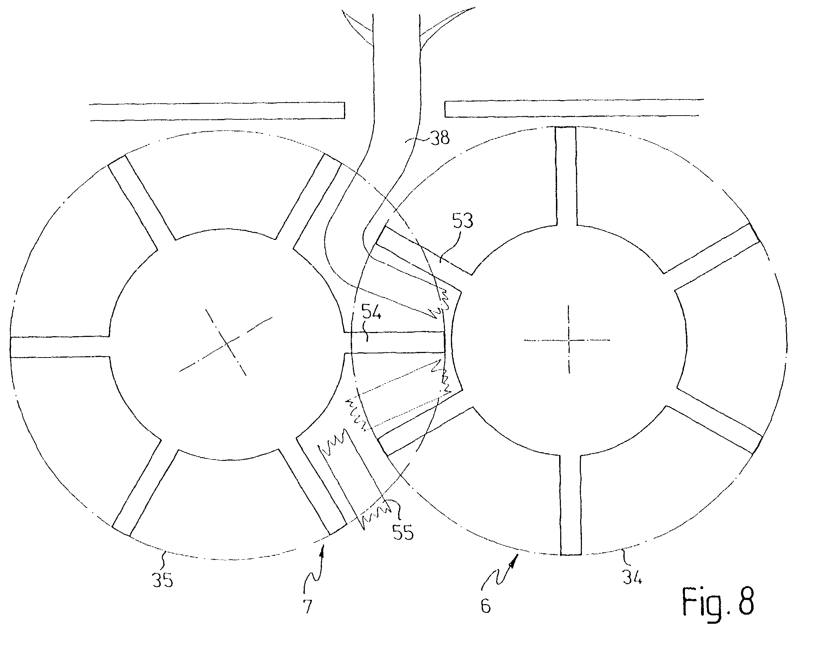

Die Ausführungsform gemäß Fig. 8 zeigt zwei Pflückwalzen 6, 7 mit radial abstehenden Mitnahmeelementen 53, 54. Der Abstand der Pflückwalze 6, 7 ist so gewählt, daß die Hüllkurven 34, 35 sich überschneiden. Die beiden Pflückwalzen 6, 7 werden hierbei mit einem Phasenversatz betrieben, so daß jeweils ein Mitnahmeelement 54 einer Pflückwalze 7 zwischen zwei Mitnahmeelemente 53 der anderen Pflückwalze 6 eingreifen kann. Der Pflanzenstengel 38 wird hierdurch so gebogen, daß er in Teilstücke 55 zerbricht. Mit dieser Anordnung läßt sich ein kurzes Häckselgut erzielen, wobei durch Quetschung zusätzlich ein guter Aufschluß gegeben ist. Diese Struktur ist besonders für den hinteren Pflückwalzenbereich, beispielsweise am hinteren Teilstück 16 von Vorteil, da hier aufgrund fehlender Fruchtstände geringere Mitnahmekräfte erforderlich sind, jedoch eine zügige Mitnahme des Stengels nach wie vor erforderlich ist.

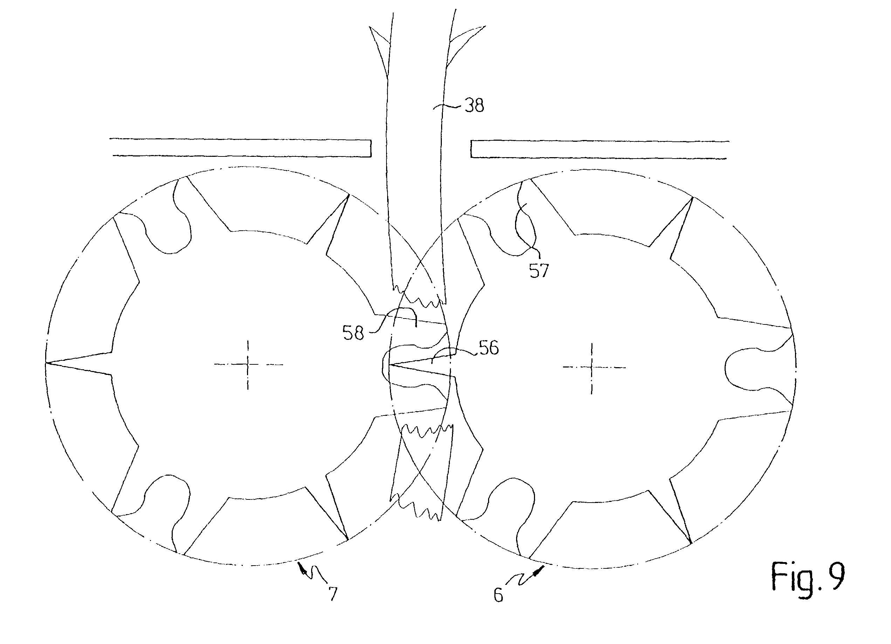

Die Ausführungsform gemäß Fig. 9 ist ebenfalls vor allem für den hinteren Pflückwalzenbereich von Vorteil, wobei nunmehr jeweils spitze, schneidende Mitnahmeelemente 56 alternierend mit hohlförmigen Mitnahmeelementen 57 angeordnet sind. In dieser Ausführungsform sind die Pflückwalzen 6, 7 wiederum so versetzt, daß jeweils ein spitzes Mitnahmeelement 56 in ein hohlförmiges Mitnahmeelement 58 eingreift. Bei dieser Art der Pflückwalzenstruktur wird der Stengel 38 nicht nur gebrochen, sondern zugleich geschnitten. Das Häckselgut wird hierbei noch stärker zerkleinert, was letztendes zu einer völligen Zerstörung der Stengelstruktur führen kann. Diese Pflückwalzenstruktur ist wiederum für Anwendungsfälle gedacht, bei denen keine hohen Einzugskräfte, jedoch ein schneller Durchzug erwünscht ist, was wiederum mit dem oberen Pflanzenstengelbereich und somit dem hinteren Pflückwalzenbereich korrespondiert.

Die Teilstücke 16, 17 (vergleiche Fig. 4) werden bevorzugt mit unterschiedlichen Pflückwalzenstrukturen versehen. So sind die Ausführungsbeispiele gemäß den Fig. 5 bis 7 wie o. a. vor allem für die vorderen Teilstücke 17 als Walzenstruktur geeignet, während die Ausführungsbeispiele gemäß den Fig. 8 und 9 bevorzugt an den hinteren Teilstücken 16 angebracht werden. Der Winkel α zwischen den Wellenstümpfen 2, 3 der Pflückwalzen 6, 7 sowie die Konuswinkel β, γ sind an die Außenkontur des zu erfassenden Außenstengels anpassungsfähig. Mit fortlaufendem Durchzug passiert der Pflanzenstengel 38 die Pflückwalzen 6, 7 in axialer Richtung, so daß in unterschiedlichen Pflückwalzenbereichen unterschiedliche Pflanzenstengelbereiche verarbeitet werden.

Die Walzenstruktur 19 des vorderen Teilstücks 17 unterliegt einem höheren Verschleiß, da sich der Pflanzenstengel 38 in diesem Pflückwalzenbereich befindet, während die Fruchtstände 39 am Abstreifer 40 gepflückt werden. Hierdurch sind in diesem Bereich hohe Mitnahmekräfte erforderlich, wobei es teilweise zu einem gewissen Schlupf zwischen dem Pflanzenstengel 38 und der entsprechenden Walzenstruktur 19 kommt. Dadurch ist der erhöhte Verschließ bedingt.

Bei einer teilbaren Pflückwalze 6 gemäß der Erfindung läßt sich das vordere Teilstück 17 beispielsweise durch einfaches Lösen der Schraube 26 abziehen und ersetzen, wobei das hintere Teilstück 16 weiter verwendet werden kann. Der Austausch des vorderen Teilstücks 17 ist ohne großen Zeitaufwand durch Lösen der einzigen Schraube 26 möglich. Die Wartung der Pflückwalze 6 wird hierdurch erheblich vereinfacht und insbesondere kostengünstiger.

Hierbei ist zu berücksichtigen, daß durch die gewinkelte Anordnung der Wellenstümpfe 2, 3 sowie die entsprechenden Konuswinkel β, γ die Durchzugsgeschwindigkeit im vorderen Teilstück 17 geringer ist als im hinteren Teilstück 16, wodurch zusätzlich der Verschleiß auch im vorderen Teilstück 17 herabgesetzt und die Lebensdauer der vorderen Walzenstrukturen 19 verlängert wird. Hierdurch werden die Wartungsintervalle vergrößert, was wiederum die Betriebskosten senkt.

### Bezugszeichenliste:

- 1.: Vorrichtung
- 2.: Wellenstumpf
- 3.: Wellenstumpf
- 4.: Pflückwalzenstruktur
- 5.: Pflückwalzenstruktur
- 6.: Pflückwalzen
- 7.: Pflückwalzen
- 8.: Lagerkasten
- 9.: Lagerkasten
- 10.: Getriebegehäuse
- 11.: Mittelachse
- 12.: Kugellager
- 13.: Wälzlager
- 14.: Kegelrad
- 15.: Antriebswelle
- 16.: Teilstück
- 17.: Teilstück
- 18.: Walzenstruktur
- 19.: Walzenstruktur
- 20.: Wellenteil
- 21.: Wellenteil
- 22.: Steckprofil
- 23.: Steckprofil
- 24.: Wellenkupplung
- 25.: Bohrung
- 26.: Schraube
- 27.: Gewindebohrung
- 28.: Abschlußplatte
- 29.: Mitnahmeelement
- 30.: Mitnahmeelement
- 31.: Mitnahmeelement
- 32.: Mitnahmeelement
- 33.: Schneide
- 34.: Hüllkurve
- 35.: Hüllkurve
- 36.: Schneide
- 37.: Mitnahmeelement
- 38.: Pflanzenstengel
- 39.: Fruchtstand
- 40.: Abstreifer
- 41.: Mitnahmeelement
- 42.: Mitnahmeelement
- 43.: Mitnahmeelement
- 44.: Mitnahmeelement
- 45.: Mitnahmeelement
- 46.: Mitnahmeelement
- 47.: Mitnahmeelement
- 48.: Freiraum
- 49.: Freiraum
- 50.: Freiraum
- 51.: Freiraum
- 52.: Freiraum
- 53.: Mitnahmeelement
- 54.: Mitnahmeelement
- 55.: Teilstück
- 56.: Mitnahmeelement
- 57.: Mitnahmeelement
- 58.: Mitnahmeelement

## Patentansprüche

1. Vorrichtung zum Ernten von stängeligem Erntegut, wie Mais oder dergleichen, mit wenigstens einer Fördervorrichtung zur Förderung des Ernteguts entlang wenigstens einer Pflückwalze, wobei die Pflückwalze (6, 7) in axialer Richtung aus wenigstens zwei miteinander verbindbaren, separaten Teilstücken (16, 17) besteht, **dadurch gekennzeichnet, dass** beide Teilstücke (16, 17) eine sich in Fahrtrichtung verjüngende konische Form aufweisen.

2. Vorrichtung nach Anspruch 1, **dadurch gekennzeichnet, dass** die Pflückwalze (6, 7) umfangsseitig Mitnahmeelemente (29, 30, 31, 32) zur Mitnahme der Pflanzenstängel (38) aufweist.

3. Vorrichtung nach Anspruch 2, **dadurch gekennzeichnet, dass** wenigstens zwei in axialer Richtung hintereinander liegende Strukturbereiche mit verschiedener Struktur (18, 19) der Mitnahmeelemente (29, 30, 31, 32) vorgesehen sind.

4. Vorrichtung nach einem der vorgenannten Ansprüche 2 oder 3, **dadurch gekennzeichnet, dass** wenigstens zwei separate Teilstücke (16, 17) der Pflückwalze (6) eine verschiedene Struktur (18, 19) der Mitnahmeelemente (29, 30, 31, 32) aufweisen.

5. Vorrichtung nach einem der vorgenannten Ansprüche, **dadurch gekennzeichnet, dass** unterschiedliche Konuswinkel (β, γ) in axialer Richtung vorgesehen sind.

6. Vorrichtung nach einem der vorgenannten Ansprüche, **dadurch gekennzeichnet, dass** zwei separate Teilstücke (16, 17) mit unterschiedlichem Konuswinkel (β, γ) versehen sind.

7. Vorrichtung nach einem der vorgenannten Ansprüche, **dadurch gekennzeichnet, dass** die Achsen zweier benachbarter Pflückwalzen (6, 7) unter einem Winkel α angeordnet sind.

8. Vorrichtung nach einem der vorgenannten Ansprüche, **dadurch gekennzeichnet, dass** eine Steckkupplung (24) zwischen zwei Teilstücken (16, 17) einer Pflückwalze (6) vorgesehen ist.

9. Vorrichtung nach Anspruch 8, **dadurch gekennzeichnet, dass** die Einstecktiefe e der Steckkupplung (24) an den Abstand a und den Winkel α zwischen zwei Pflückwalzen (6, 7) angepasst ist.

10. Vorrichtung nach einem der vorgenannten Ansprüche, **dadurch gekennzeichnet, dass** eine Walzenstruktur (18, 19) mit schneidenden Mitnahmeelementen (29, 30, 31, 32) vorgesehen ist.

11. Vorrichtung nach einem der vorgenannten Ansprüche, **dadurch gekennzeichnet, dass** eine Walzenstruktur (18, 19) mit stumpfen Mitnahmeelementen (44, 45, 46) vorgesehen ist.

12. Vorrichtung nach einem der vorgenannten Ansprüche, **dadurch gekennzeichnet, dass** zwei benachbarte Pflückwalzen (6, 7) einen gekoppelten Antrieb aufweisen, sodass korrespondierende Pflückwalzen (6, 7) phasengleich und gegenläufig umlaufen.

13. Vorrichtung nach einem der vorgenannten Ansprüche, **dadurch gekennzeichnet, dass** gutaufnehmende Freiräume (48) zwischen Mitnahmeelementen in der Walzenstruktur (18, 19) vorgesehen sind.

14. Vorrichtung nach einem der vorgenannten Ansprüche, **dadurch gekennzeichnet, dass** Mitnahmeelemente zweier benachbarter Pflückwalzen (6, 7) so ausgebildet sind, dass sich die Hüllkurven der Pflückwalzen (6, 7) schneiden.

## Claims

1. Apparatus for harvesting stalk crop material such as corn or the like, comprising at least one conveyor device for conveying the crop material along at least one plucking drum, wherein the plucking drum (6, 7) in the axial direction comprises at least two separate portions (16, 17) which can be connected together, **characterised in that** both portions (16, 17) are of a conical shape tapering in the direction of travel.

2. Apparatus according to claim 1 **characterised in that** at its periphery the plucking drum (6, 7) has entrainment elements (29, 30, 31, 32) for entrainment of the plant stalks (38).

3. Apparatus according to claim 2 **characterised in that** there are provided at least two structural regions, disposed in succession in the axial direction, with differing structures (18, 19) of the entrainment elements (29, 30, 31, 32).

4. Apparatus according to one of preceding claims 2 and 3 **characterised in that** at least two separate portions (16, 17) of the plucking drum (6) have a differing structure (18, 19) of the entrainment elements (29, 30, 31, 32).

5. Apparatus according to one of the preceding claims **characterised in that** there are provided differing cone angles (β, γ) in the axial direction.

6. Apparatus according to one of the preceding claims **characterised in that** two separate portions (16, 17) are provided with differing cone angles (β, γ).

7. Apparatus according to one of the preceding claims **characterised in that** the axes of two adjacent plucking drums (6, 7) are arranged at an angle α.

8. Apparatus according to one of the preceding claims **characterised in that** there is provided a push-in coupling (24) between two portions (16, 17) of a plucking drum (6).

9. Apparatus according to claim 8 **characterised in that** the push-in depth e of the push-in coupling (24) is matched to the spacing a and the angle α between two plucking drums (6, 7).

10. Apparatus according to one of the preceding claims **characterised in that** there is provided a drum structure (18, 19) with cutting entrainment elements (29, 30, 31, 32).

11. Apparatus according to one of the preceding claims **characterised in that** there is provided a drum structure (18, 19) with blunt entrainment elements (44, 45, 46).

12. Apparatus according to one of the preceding claims **characterised in that** two adjacent plucking drums (6, 7) have a coupled drive so that corresponding plucking drums (6, 7) rotate in in-phase and opposite relationship.

13. Apparatus according to one of the preceding claims **characterised in that** there are provided material-receiving cavities (48) between entrainment elements in the drum structure (18, 19).

14. Apparatus according to one of the preceding claims **characterised in that** entrainment elements of two adjacent plucking drums (6, 7) are such that the envelope curves of the plucking drums (6, 7) intersect.

## Revendications

1. Dispositif pour la récolte de produits de récolte sur tige, tels que du maïs ou similaire, comportant au moins un dispositif de transport pour transporter le produit de récolte le long d'au moins un tambour cueilleur, le tambour cueilleur (6, 7), dans la direction axiale, étant formé d'au moins deux tronçons élémentaires (6, 7) distincts, liés l'un à l'autre, **caractérisé en ce que** les deux tronçons élémentaires (16, 17) ont une forme conique qui se rétrécit dans la direction de déplacement.

2. Dispositif selon la revendication 1, **caractérisé en ce que** le tambour cueilleur (6, 7) comporte sur son pourtour des éléments d'entraînement (29, 30, 31, 32) pour entraîner les tiges de plantes (38).

3. Dispositif selon la revendication 2, **caractérisé en ce qu'**il est prévu au moins deux zones disposées l'une derrière l'autre dans la direction axiale avec une structure (18, 19) différente des éléments d'entraînement (29, 30, 31, 32).

4. Dispositif selon une des revendications précédentes 2 ou 3, **caractérisé en ce qu'**au moins deux tronçons élémentaires (6, 7) distincts du tambour cueilleur (6) présentent une structure différente des éléments d'entraînement (29, 30, 31, 32).

5. Dispositif selon une des revendications précédentes, **caractérisé en ce qu'**il est prévu des angles de cône (B, γ) différents dans la direction axiale.

6. Dispositif selon une des revendications précédentes, **caractérisé en ce que** deux tronçons élémentaires (6, 7) distincts présentent des angles de cône (β, γ) différents.

7. Dispositif selon une des revendications précédentes, **caractérisé en ce que** les axes de deux tambours cueilleurs (6, 7) voisins sont disposés suivant un angle α.

8. Dispositif selon une des revendications précédentes, **caractérisé en ce qu'**il est prévu un accouplement à emboîtement (24) entre deux tronçons élémentaires (16, 17) d'un tambour cueilleur (6).

9. Dispositif selon la revendication 8, **caractérisé en ce que** la profondeur d'emboîtement "e" de l'accouplement à emboîtement (24) est adaptée à la distance "a" et à l'angle "α" entre deux entre deux tambours cueilleurs (6, 7).

10. Dispositif selon une des revendications précédentes, **caractérisé en ce qu'**il est prévu une structure de tambour (18, 19) avec des éléments d'entraînement (29, 30, 31, 32) coupants

11. Dispositif selon une des revendications précédentes, **caractérisé en ce qu'**il est prévu une structure de tambour (18, 19) avec des éléments d'entraînement (44, 45, 46) non coupants

12. Dispositif selon une des revendications précédentes, **caractérisé en ce que** deux tambours cueilleurs (6, 7) voisins sont couplés en entraînement, de telle sorte que des tambours cueilleurs (6, 7) correspondants tournent en phase et en sens contraire.

13. Dispositif selon une des revendications précédentes, **caractérisé en ce qu'**il est prévu des espaces libres (48) pour recevoir le produit entre les éléments d'entraînement dans la structure de tambour (18, 19).

14. Dispositif selon une des revendications précédentes, **caractérisé en ce que** les éléments d'entraînement de deux tambours cueilleurs (6, 7) voisins sont agencés de manière telle que les courbes enveloppes des tambours cueilleurs (6, 7) se coupent.
